# EUROPÄISCHE PATENTSCHRIFT

(11) **EP 0 355 201 B1**
(45) Veröffentlichungstag und Bekanntmachung des Hinweises auf die Patenterteilung: **15.02.1995**
(21) Anmeldenummer: 88118379.2
(22) Anmeldetag: 04.11.1988
(51) Int. Cl.: G12B 11/00

(54) **Anzeigeinstrument**
Indication instrument
Instrument indicateur

(30) Priorität: 26.08.1988 DE 3828910
(43) Veröffentlichungstag der Anmeldung: 28.02.1990
(73) Patentinhaber: VDO Adolf Schindling AG, D-60487 Frankfurt (DE)
(72) Erfinder: Matl, Helmut, D-6114 Gross Umstadt (DE)
(74) Vertreter: Klein, Thomas, Dipl.-Ing. (FH)

(56) Entgegenhaltungen:
- DE-A- 3 028 047
- FR-A- 2 008 859
- US-A- 4 380 043

## Beschreibung

Die Erfindung bezieht sich auf ein Anzeigeinstrument mit einer Bodenplatte und einer Frontplatte, zwischen denen zumindest ein Meßwert befestigt ist, wobei das Meßwerk mit Kontaktstiften durch die Bodenplatte hindurchgeführt ist und eine hinter der Bodenplatte verlaufende Leiterplatte kontaktiert. Solche Anzeigeinstrumente sind allgemein bekannt und gebräuchlich.

Üblicherweise sind die Kontaktstifte der Meßwerke solcher Anzeigeinstrumente mit Gewinde versehen, so daß auf sie jeweils eine Mutter zur Befestigung des jeweiligen Meßwerkes auf der Bodenplatte geschraubt werden kann. Die Kontaktstifte sind deshalb zugleich Befestigungsschrauben für die Meßwerke. Diese Art der Befestigung der Meßwerke auf der Bodenplatte hat den Nachteil, daß je nach den vorhandenen Fertigungstoleranzen ein mehr oder minder großer Spalt zwischen der Frontplatte und der vorderen Stirnfläche der Meßwerke verbleibt. Werden solche Anzeigeinstrumente indirekt von ihrer Rückseite her beleuchtet, so kommt es durch solche Spalte zu einem unerwünschten Streulichteinfall auf der Vorderseite des Anzeigeinstrumentes. In ungünstigen Fällen kann es sogar zu Klappergeräuschen kommen, wenn durch Fahrzeugschwingungen das Meßwerk periodisch von der Frontplatte berührt wird.

Aus der FA-A-20 08 859 ist ein Anzeigeinstrument mit einem Meßwerk bekannt, das mit seinem vorderen Endbereich eine Ausnehmung in einer Frontplatte durchragt und in diesem Bereich an der Frontplatte befestigt ist.

Von der Rückseite des Meßwerks stehen Kontaktstifte hervor, die in Steckaufnahmen hineinragen.

Die Steckaufnahmen sind an einer Bodenplatte angeordnet, auf deren dem Meßwerk zugewandten Seite sich eine flexible Leiterplatte befindet. Über Kontaktlappen sind die Steckaufnahmen mit den Leiterbahnen der Leiterplatte verbunden.

Der Erfindung liegt die Aufgabe zugrunde, ein Anzeigeinstrument der eingangs genannten Art derart zu gestalten, daß auf möglichst einfache Weise Spiel zwischen seiner Frontplatte und der vorderen Stirnfläche des Meßwerks oder den in ihm vorgesehenen Meßwerken vermieden wird.

Diese Aufgabe wird erfindungsgemäß dadurch gelöst, daß das Meßwerk quer zur Bodenplatte verschiebbar von der Bodenplatte gehalten ist, wobei das Meßwerk durch zumindest eine Druckfeder mit seiner vorderen Stirnfläche gegen die der Bodenplatte zugewandte Fläche der Frontplatte vorgespannt ist.

Durch diese Gestaltung liegt das Meßwerk stets mit Vorspannung gegen die Frontplatte an. Dadurch ist ein Luftspalt zwischen dem Meßwerk und der Rückseite der Frontplatte ausgeschlossen, so daß es nicht zu einem Streulichteinfall auf der Vorderseite des Anzeigeinstrumentes oder zu Klappergeräuschen kommen kann. Sind in einem Anzeigeinstrument mehrere Meßwerke vorgesehen, so gleichen die Druckfedern Toleranzen aus. Durch die erfindungsgemäßen Druckfedern ist ein schwingungsfreier Festsitz der Meßwerke sichergestellt.

Vor allem bei Anzeigeinstrumenten mit mehreren Meßwerken, beispielsweise einer Drehzahlmesse, einem Tachometer und einer Bi-Metall-Instrument, ist es vorteilhaft, wenn gemäß einer anderen Ausgestaltung der Erfindung die Leiterplatte zur Kontaktierung der Kontaktstifte Steckaufnahmen aufweist. Die einzelnen Meßwerke kontaktieren auch dann die Leiterbahn zuverlässig, wenn sie infolge von Toleranzen unterschiedlich weit die Leiterbahn durchdringen.

Besonders einfach ist jedes Meßwerk axial verschieblich an der Bodenplatte gehalten, wenn es mit am Meßwerk vorgesehenen Führungshülsen über Führungsbolzen der Bodenplatte oder mit an ihm vorgesehenen Führungsbolzen in an der Bodenplatte vorgesehene Führungshülsen greift.

Grundsätzlich könnte man jedes Meßwerk mit beispielsweise einer zwischen seiner Rückseite oder einem flanschartigen Rand und der Bodenplatte gespannten Schraubendruckfeder gegen die Frontplatte vorspannen. Besonders einfach gestaltet sich jedoch das Anzeigeinstrument, wenn gemäß einer vorteilhaften Ausgestaltung der Erfindung für jedes Meßwerk als Druckfeder insgesamt zwei Gummikappen vorgesehen sind, welche jeweils mit ihrer Stirnseite gegen eine rückseitige Fläche des Meßwerkes anliegen und jeweils auf das freie Ende eines aus der Bodenplatte vorspringenden Abstützbolzens aufgesetzt sind.

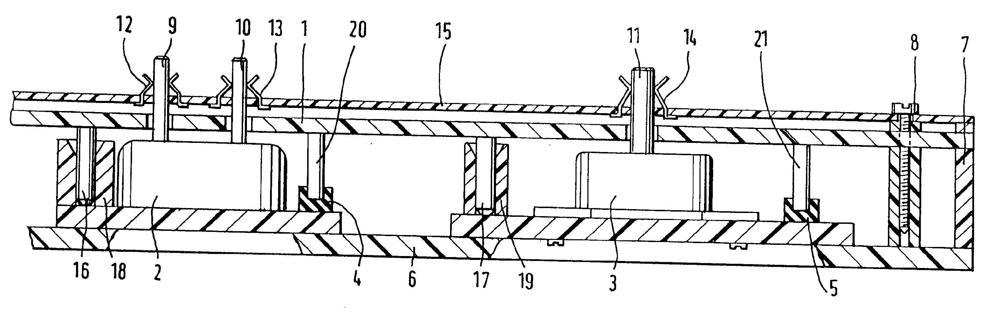

Die Erfindung läßt zahlreiche Ausführungsformen zu. Zur weiteren Verdeutlichung ihres Grundprinzips ist eine davon schematisch in der Zeichnung dargestellt und wird nachfolgend beschrieben. Diese zeigt einen Schnitt durch einen Teilbereich eines erfindungsgemäßen Anzeigeinstrumentes.

In der Zeichnung ist teilweise eine Bodenplatte 1 dargestellt, auf der axial verschieblich zwei Meßwerke 2, 3 gehalten sind. Diese Meßwerke 2, 3 werden jeweils durch Druckfedern 4, 5, bei denen es sich bei dieser Ausführungsform um Gummikappen handelt, gegen eine den Meßwerken 2, 3 gemeinsame Frontplatte 6 vorgespannt. Bei der Frontplatte 6 kann es sich auch um ein Ziffernblatt handeln. Die Frontplatte 6 ist bei dieser Ausführungsform Teil eines Gehäuses 7, gegen welches die Grundplatte 1 durch Befestigungsschrauben 8 gehalten ist.

Die Meßwerke 2, 3 weisen an ihrer Rückseite Kontaktstifte 9, 10, 11 auf, welche durch die Bodenplatte 1 hindurchgeführt sind und jeweils in eine Steckaufnahme 12, 13, 14 einer Leiterplatte 15 greifen, die mit Abstand zur Bodenplatte 1 hinter ihr angeordnet und durch die Befestigungsschrauben 8 dort gehalten ist.

Von der Bodenplatte 1 ragen mehrere Führungsbolzen 16, 17 zu den Meßwerken 2, 3 hin. Diese greifen mit Führungshülsen 18, 19 über diese Führungsbolzen 16, 17, so daß die Meßwerke axial verschieblich auf der Bodenplatte 1 gehalten sind. In der Praxis wird man zumindest zwei Führungshülsen 18, 19 und zwei Führungsbolzen 16, 17 pro Meßwerk 2, 3 vorsehen.

Die Bodenplatte 1 hat weiterhin gegen einen flanschartigen Rand der Meßwerke 2, 3 gerichtete Abstützbolzen 20, 21, auf welche jeweils eine der Druckfedern 4, 5 in Form einer Gummikappe gestülpt ist. Auch von den Abstützbolzen 20, 21 wird man in der Praxis pro Meßwerk 2, 3 zumindest zwei Stück vorsehen.

## Patentansprüche

1. Anzeigeinstrument mit einer Bodenplatte (1) und einer Frontplatte (6), zwischen denen zumindest ein Meßwerk (2, 3) befestigt ist, wobei das Meßwerk (2, 3) mit Kontaktstiften (9, 10, 11) durch die Bodenplatte (1) hindurchgeführt ist und eine hinter der Bodenplatte (1) verlaufende Leiterplatte (15) kontaktiert, dadurch gekennzeichnet, daß das Meßwerk (2, 3) quer zur Bodenplatte (1) verschiebbar von der Bodenplatte (1) gehalten ist, wobei das Meßwerk (2, 3) durch zumindest eine Druckfeder (4,5) mit seiner vorderen Stirnfläche gegen die der Bodenplatte (1) zugewandte Fläche der Frontplatte (6) vorgespannt ist.

2. Anzeigeinstrument nach Anspruch 1, dadurch gekennzeichnet, daß die Leiterplatte (15) zur Kontaktierung der Kontaktstifte (9, 10, 11) Steckaufnahmen (12, 13, 14) aufweist.

3. Anzeigeinstrument nach den Ansprüchen 1 oder 2, dadurch gekennzeichnet, daß das Meßwerk (2, 3) mit am Meßwerk (2, 3) vorgesehenen Führungshülsen (18, 19) über Führungsbolzen (16, 17) der Bodenplatte (1) oder mit an ihm vorgesehenen Führungsbolzen in an der Bodenplatte (1) vorgesehene Führungshülsen greift.

4. Anzeigeinstrument nach einem oder mehreren der vorangehenden Ansprüche, dadurch gekennzeichnet, daß für jedes Meßwerk (2, 3) als Druckfeder (4, 5) insgesamt zwei Gummikappen vorgesehen sind, welche jeweils mit ihrer Stirnseite gegen eine rückseitige Fläche des Meßwerkes (2, 3) anliegen und jeweils auf das freie Ende eines aus der Bodenplatte (1) vorspringenden Abstützbolzens (20, 21) aufgesetzt sind.

## Claims

1. An indicator instrument having a base plate (1) and a front panel (6) between which at least one meter (2, 3) is fastened, wherein contact pins (9, 10, 11) of the meter (2, 3) are led through the base plate (1) and contact a printed board (15) extending behind the base plate (1), characterised in that the meter (2, 3) is held by the base plate (1) so that it is displaceable at right angles to the base plate (1), wherein the meter (2, 3) is held under stress by at least one pressure spring (4, 5) with its front face against the face of the front panel (6) which faces the base plate (1).

2. An indicator instrument according to claim 1, characterised in that the printed board (15) has plug-in receivers (12, 13, 14) for contacting the contact pins (9, 10, 11).

3. An indicator instrument according to claims 1 or 2, characterised in that the meter (2, 3) engages in guide bushes provided in the base plate (1) by means of guide bushes (18, 19) provided on the meter (2, 3) by way of guide pins (16, 17) on the base plate (1), or by means of guide pins provided on the meter.

4. An indicator instrument according to one or more of the preceding claims, characterised in that a total of two rubber caps is provided as pressure springs (4, 5) for each meter (2, 3), which rubber caps are each seated with their face against a back face of the meter (2, 3) and which are each placed on the free end of a support pin (20, 21) projecting from the base plate (1).

## Revendications

1. Instrument indicateur comprenant une plaque de fond (1) et une plaque frontale (6) entre lesquelles est fixé au moins un système de mesure (2, 3) traversant la plaque de fond (1) par des fiches de contact (9, 10, 11) qui établissent le contact avec une plaque à circuits imprimés (15) s'étendant derrière la plaque de fond (1), caractérisé en ce que le système de mesure (2, 3) est supporté par la plaque de fond (1) de manière qu'il soit déplaçable en translation transversalement à la plaque de fond (1), le système de mesure (2, 3) étant appliqué par sa face frontale, au moyen d'au moins un ressort de compression (4, 5), contre la face de la plaque frontale (6) dirigée vers la plaque de fond (1).

2. Instrument indicateur selon la revendication 1, caractérisé en ce que la plaque à circuits imprimés (15) présente des réceptions ou fiches femelles (12, 13, 14) pour l'établissement du contact avec les fiches de contact (9, 10, 11).

3. Instrument indicateur selon la revendication 1 ou 2, caractérisé en ce que le système de mesure (2, 3) est enfilé au moyen de douilles de guidage (18, 19) prévues sur lui par-dessus des tiges de guidage (16, 17) de la plaque de fond (1), ou pénètre par des tiges de guidage prévues sur lui dans des douilles de guidage portées par la plaque de fond (1).

4. Instrument indicateur selon une ou plusieurs des revendications précédentes, caractérisé en ce que, en tant que ressort de compression (4, 5), on a prévu, pour chaque système de mesure (2, 3), deux chapeaux de caoutchouc qui s'appliquent chacun par leur côté frontal contre une face arrière du système de mesure (2, 3) et sont enfilés chacun sur l'extrémité libre d'une cheville d'appui (20, 21) faisant saillie de la plaque de fond (1).
